# EUROPÄISCHE PATENTANMELDUNG

(11) **EP 2 641 818 A2**
(43) Veröffentlichungstag der Anmeldung: **25.09.2013**
(21) Anmeldenummer: 13160011.6
(22) Anmeldetag: 19.03.2013
(51) Int. Cl.: B62J 1/00, B62J 1/20

(54) **Leichtgewichtfahrradsattel und Sitzauflage**

(30) Priorität: 20.03.2012 DE 102012005574
(71) Anmelder: Sigl, Thomas, 94359 Loitzendorf (DE)
(72) Erfinder: Trenner, Thomas, 94560 Offenberg (DE)
(74) Vertreter: Grünecker, Kinkeldey, Stockmair & Schwanhäusser

(57) **Zusammenfassung**

Die vorliegende Erfindung betrifft einen Sattel (100) umfassend eine Sitzoberfläche (150) und ein Sattelgestell (110), die aus Kunststofffasergewebe gefertigt sind. Das Sattelgestell weist unterhalb der Sitzoberfläche einen Klemmbereich (111) auf, der integral mit der Sitzoberfläche geformt ist. Der Klemmbereich des Sattelgestells weist einen Schaumstoff auf, der in dem Laminat miteingebunden ist. Die vorliegende Erfindung betrifft weiterhin eine Sitzauflage (200), die an dem Sattel der vorliegenden Erfindung lösbar montiert werden kann. Die Sitzauflage ist geeignet auf dem hinteren Bereich des Sattels positioniert zu werden.

## Beschreibung

Die vorliegende Erfindung betrifft einen Sattel der komplett aus Kunststofffasern gefertigt ist. Ferner betrifft die vorliegende Erfindung eine abnehmbare Sitzauflage, die lösbar an dem Sattel erfindungsgemäß montiert werden kann.

Um Gewicht zu reduzieren werden in der Anfertigung von Leichtgewichtsätteln Leichtgewichtsmaterialien eingesetzt. Herkömmliche Leichtgewichtsättel bestehen aus einer Satteldecke aus Kohlefaserkunststoff, der auf einem metallenen Sattelgestell montiert ist. Das metallene Sattelgestell verleiht dem Sattel die nötige Steifigkeit insbesondere im Klemmbereich, wo das Sattelgestell an dem Sattelrohr befestigt wird. Obwohl das Gewicht solcher Sättel durch das Einsetzen der Satteldecke aus Kohlefaserkunststoff reduziert werden kann, wird die Gewichtsreduzierung durch das Einsetzen des metallenen Sattelgestells stark beschränkt. Um das Sattelgestell an der Satteldecke zu befestigen, werden üblicherweise die überstehenden Enden des Sattelgestells in geeignete Öffnungen hineingedrückt. Diese Öffnungen stehen beim Fahrradfahren unter ständigen mechanischen Stress und können unter starken Belastungen leicht brechen; dieser Umstand stellt eine Gefahr für den Benutzer dar.

Die Offenlegungsschrift DE 101 11 099 A1 zeigt einen herkömmlichen Leichtgewichtssattel, der komplett aus Karbonfasern erstellt wird, um das Gewicht weiter zu reduzieren. Dieser umfasst ein Sattelgestell, das aus einem Bündel mit einem Karbonschlauch umhüllten Carbon-Rovings besteht und einer Satteldecke. Das Sattelgestell wird dann an der Satteldecke montiert indem die überstehenden Enden des Sattelgestells mit der Satteldecke verharzt werden. Um die mechanischen Belastungen auszuhalten sind die Karbonschläuche im Klemmbereich durch Edelstahlröhrchen, die die Karbonschläuche umhüllen, geschützt.

Die Edelstahlröhrchen, die für die Steifigkeit des Sattels eingesetzt werden müssen, erhöhen das Gesamtgewicht des Sattels. Außerdem leiden die Stellen, an denen das Sattelgestell mit der Satteldecke verharzt wird, stark unter mechanischem Stress und sind somit anfällig für Brüche.

Die Aufgabe, die der vorliegenden Erfindung zugrunde liegt, besteht darin die oben genannten Einschränkungen der herkömmlichen Sättel zu überwinden, indem ein Sattel hergestellt wird, der ein geringes Gewicht hat und gleichzeitig eine hohe Steifigkeit aufweist, besonders an den empfindlichen Druckstellen, und dabei auf einfache und flexible Weise herstellbar ist.

Dieses Ziel wird durch den Sattel gemäß der vorliegende Erfindung erreicht. Der Sattel umfasst erfindungsgemäß eine Sitzoberfläche und ein Sattelgestell, die aus Kunststofffasergewebe gefertigt sind. Das Sattelgestell weist unterhalb der Sitzoberfläche einen Klemmbereich auf, der integral mit der Sitzoberfläche geformt ist. Der Klemmbereich des Sattelgestells weist einen Schaumstoff auf, der in einem Laminat aus Kunststofffasergewebe eingebunden ist. Das Kunststofffasergewebe könnte Kohlefaserkunststoff sein.

Da das Sattelgestell integral mit der Sitzoberfläche geformt ist, weist der Sattel weder Nahtstellen noch verharzte Bereiche auf, die eine negative Auswirkung auf die gesamte Stabilität des Sattels ausüben können. Ferner verleiht der Schaumstoff, der in dem Laminat eingebunden ist, die nötige Steifigkeit in dem Bereich, wo der Sattel an der Sattelstütze montiert wird. Dadurch ist das Sattelgestell im Klemmbereich stabil und stark genug, um extreme mechanische Belastungen zu überstehen und somit kann die Anwendung von Edelstahlröhrchen zur Verstärkung der gesamten Sattelstruktur vermieden werden. Schaumstoff ist leicht zu bearbeiten und zu formen und kann vorteilhaft benutzt werden um Radien zu verstärken. Zum Beispiel kann Schaumstoff leicht gebogen und so eingesetzt werden, um spezielle Bereiche des Sattels zu verstärken, die nicht gerade verlaufen. Ferner besitzt Schaumstoff eine gewisse Flexibilität und kann somit Stöße besser absorbieren als Edelstahl. Schließlich kann Schaumstoff besser und billiger als Edelstahl verarbeitet werden, er ist leichter und flexibler als Edelstahl, kann leicht geformt werden und ist druck- und hitzebeständig.

In einer Ausführungsform weist ein hinterer Bereich der Sitzoberfläche einen Schaumstoff auf, der in Kunststofffasergewebe eingebunden wird. Das Kunststofffasergewebe, aus dem ein Sattel hergestellt wird, kann zumindest in eine Richtung senkrecht zu einer Sitzoberfläche sehr flexibel gestaltet werden, um den Komfort des Sattel zu Erhöhen.

Der hintere Bereich des Sattels muss dem Gewicht des Radfahrers standhalten und ist während der Fahrt besonders beansprucht. Daher besteht die Gefahr, dass ein Sattel aus Kunststofffasergewebe die hohe Beanspruchungen, den dieser während der fahrt ausgesetzt ist, nicht standhalten könnte. Besonders beansprucht ist eine untere Kante des hinteren Bereichs, welche den hinteren Bereich umrandet und in die Klemmelemente verläuft. Die Kante hat eine tragende Funktion und muss die von der Sitzoberfläche abgefangenen Stöße absorbieren. Deswegen ist die Kante des Hinteren Bereichs den meisten Belastungen ausgesetzt. Der in dem hinteren Bereich eingebundene Schaumstoff erhört die Standhaltigkeit und Steifigkeit dieses Bereiches und vermeidet somit Brüche. Die erhöhte Steifigkeit wird insbesondere in eine Richtung gewährleistet, die senkrecht zu der Richtung des Schaumstoffeinsatzes verläuft.

In einer weiteren Ausführungsform der vorliegenden Erfindung ist der Schaumstoff in dem Klemmbereich in mindestens einer Lage aus Kunststofffasergewebe. Alternativ könnte der Schaumstoff in dem Klemmbereich in mindestens einer Lage aus Kunststofffasergewebe und mindestens einer Lage Kevlar Schicht eingewickelt. Durch die Kevlar Schicht wird der Klemmbereich, der das Gestell und somit den Sattel tragen soll, flexibler und kann somit Stöße besser absorbieren. Die Kevlar Schicht gewährleistet genügend Festigkeit und Härte, um die Lagen aus Kunststofffasergewebe und den darin eingewickelten Kern zu bewahren.

In einer weiteren Ausführungsform der vorliegenden Erfindung umfasst der Klemmbereich des Sattelgestells zwei in die Längsrichtung des Sattels parallel verlaufende Klemmelemente. Durch die Klemmelemente kann der Sattel an herkömmlichen Sattelstützen problemlos fixiert werden.

In einer weiteren Ausführungsform der vorliegenden Erfindung sind die Klemmelemente Schläuche, wobei der Querschnitt der Schläuche ein Kreissegment ist. Klemmelemente mit diesem Querschnitt gewähren einen Fixierbolzen, der zum Fixieren des Sattels an einer Sattelstütze benutz wird, Auflagepunkte.

In einer weiteren Ausführungsform der vorliegenden Erfindung ist der Schaumstoff in einer unteren Kannte eines hinteren Bereiches des Sattels eingebunden. Der Schaumstoff verläuft von dem hinteren Bereich in die Klemmbereiche kontinuierlich. Dies erhöht die Steifigkeit des Sattels zusätzlich.

In einer weiteren Ausführungsform der vorliegenden Erfindung weist die Sitzoberfläche einen Schlitz auf, die in Längsrichtung des Sattels verläuft. Der Schlitz kann vorteilhaft benutzt werden, um eine Sitzauflage an den Sattel zu positionieren und zu befestigen.

Die vorliegende Erfindung betrifft weiterhin eine Sitzauflage, die an einen Sattel, wie z.B. den Sattel der vorliegenden Erfindung, lösbar montiert werden kann. Die Sitzauflage umfasst ein Gestell, das geeignet ist auf dem hinteren Bereich des Sattels lösbar fixiert zu werden. Die Sitzauflage könnte z.B. an einer Stelle positioniert werden, wo das Becken des Radfahrers drückt. Mindestens ein Bereich der Kanten des Gestells weist ein Verankerungselement auf, das an einer seitlichen Flanke des hinteren Bereiches des Sattels lösbar verankert werden kann.

In einer Ausführungsform umfasst das Verankerungselement seitliche Kanten des Gestells, die so gebogen und geformt sind, dass sie an den äußeren seitlichen Flanken des hinteren Bereiches des Sattels lösbar verankert werden können. Demgemäß kann das Verankerungselement in einer sehr einfachen und kosteffektiven Weise geformt werden.

Die Sitzauflage kann an dem Sattel montiert werden um den Komfort des Sattels zu erhöhen. Die Befestigung der Sitzauflage an dem Sattel erfolgt durch das Verankerungselement, das an einer Flanke des Sattels verankert wird. Somit werden keine weiteren Hilfsmittel, wie Schrauben, Klemmen usw., benötigt. Dies vereinfacht einerseits die Montage der Sitzauflage und andererseits ermöglicht es zusätzlich die Gewichtsreduktion des Sattels mit Sitzauflage. Der Sattel mit der Sitzauflage gemäß der vorliegenden Erfindung weist ein Gesamtgewicht von unter 100g auf.

In einer Ausführungsform der Erfindung weist eine untere Oberfläche der Sitzauflage einen Vorsprung auf, der geeignet ist in einen Schlitz des Sattels hineingeschoben zu werden. Durch den Vorsprung, der in den Schlitz hineingeschoben werden muss, wird die Sitzauflage positioniert, so dass das Verankerungselement an den Flanken des Sattel ausgerichtet ist, mit der es verankert werden muss.

In einer Ausführungsform der Erfindung besteht der Vorsprung aus zwei dehnfähigen Finnen, wobei ein überstehendes Ende jeder Finne ein Einrastelement aufweist, das geeignet ist an einer Unterseite eines Sattels eingerastet zu werden. Dadurch wird die Sitztauflage sicher an den Sattel eingerastet, um ein Ablösen der Sitzauflage zu vermeiden.

Die vorliegende Erfindung betrifft weiterhin einen Sattel, der die oben beschriebene Sitztauflage umfasst. Der Sattel kann jener der vorliegenden Erfindung sein und die Sitzauflage kann an den Sattel lösbar montiert werden.

Anhand der in den beiliegenden Zeichnungen dargestellten vorteilhaften Ausgestaltungen wird die Erfindung im Folgenden näher erläutert. Ähnliche oder korrespondierende Einzelheiten des erfindungsgemäßen Gegenstands sind mit denselben Bezugszeichen versehen. Es zeigen:
**Abbildung 1** Zeigt eine schematische Skizze einer Untersicht des Sattels gemäß einer Ausführungsform der vorliegenden Erfindung;
**Abbildung 2** Zeigt einen Querschnitt eines Klemmbereiches des Sattels gemäß einer Ausführungsform der vorliegenden Erfindung (a), und einen auf dem Klemmbereich aufgelegten Fixierbolzen (b);
**Abbildung 3** Zeigt eine schematische Skizze einer Seitenansicht des Sattels gemäß einer Ausführungsform der vorliegenden Erfindung;
**Abbildung 4** Zeigt eine schematische Skizze einer Draufsicht des Sattels gemäß einer Ausführungsform der vorliegenden Erfindung;
**Abbildung 5** Zeigt eine schematische Skizze einer Untersicht der Sitzauflage gemäß einer Ausführungsform der vorliegenden Erfindung;
**Abbildung 6** Zeigt eine schematische Skizze einer Draufsicht des Sattels an dem die Sitzauflage montiert ist gemäß einer Ausführungsform der vorliegenden Erfindung;
**Abbildung 7** Zeigt eine schematische Skizze einer Untersicht des Sattels an dem die Sitzauflage montiert ist gemäß einer Ausführungsform der vorliegenden Erfindung.

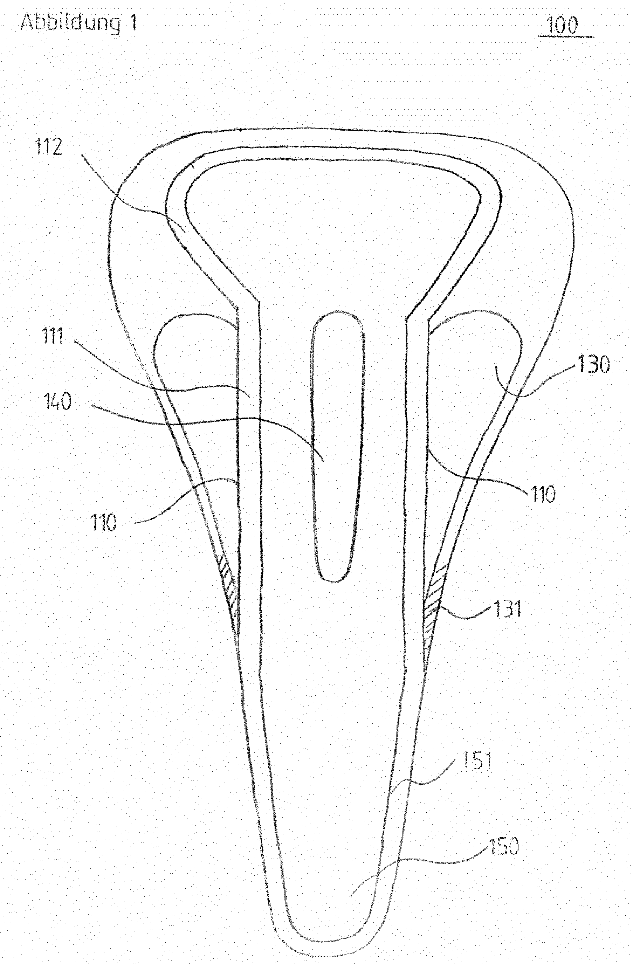

Abbildung 1 zeigt eine schematische Skizze einer Untersicht eines Sattels 100 gemäß einer Ausführungsform der vorliegenden Erfindung.

Der Sattel 100 umfasst eine Sitzoberfläche 150 und ein tragendes Gestell, oder Sattelgestell 110. Die Sitzoberfläche 150 ist aus einem Laminat aus Kohlefaser und Kevlar durch Autoklaven Technik hergestellt. Das Sattelgestell 110 besteht aus einem Klemmbereich 111 und aus einem hinteren Bereich 112. Der Klemmbereich weist zwei in die Längsrichtung des Sattels parallel verlaufende Schläuche auf, welche als Klemmelemente 111 dienen. Diese können an eine Sattelstütze (nicht gezeigt) eines Fahrrades durch eine Klemmvorrichtung befestigt werden. Das Sattelgestell 110 hat eine tragende Funktion und muss extremen Belastungen standhalten. Aus diesem Grund muss dieses eine bestimmte Steifigkeit und Resistenz aufweisen.

Kohlefaserkunststoff und Kevlar können so verarbeitet werden, um eine Oberfläche, wie die Sitzoberfläche 150, zu erzeugen, die eine gewünschte Steifigkeit in eine erste Richtung, z.B. eine Richtung parallel zu der Sitzoberfläche 150 hat und gleichzeitig flexibel entlang einer zweiten Richtung, z.B. eine Richtung senkrecht zu der Sitzoberfläche 150, ist. Dies verleiht dem Sattel die nötige Flexibilität, Steifigkeit und Stabilität. Des Weiteren sind Kohlefaserkunststoff und Kevlar sehr leicht und ermöglichen somit das gesamte Gewicht des Sattels zu reduzieren.

Der Querschnitt der Schläuche gemäß einer Ausführungsform der vorliegenden Erfindung ist im Wesentlichen ein Halbkreis aber jeder andere Querschnitt könnte benutzt werden.

Obwohl der Klemmbereich 111 des Sattels 100 aus zwei in die Längsrichtung des Sattels parallel verlaufende Schläuche besteht, kann dieser anders aufgebaut sein. Insbesondere kann jeder Aufbau des Klemmbereichs benutzt werden, der zum Fixieren des Sattels an einer Sattelstütze geeignet ist.

Die äußere Wand des Klemmbereichs 111 umfasst eine Schicht, die aus einem Laminat aus Kohlefaser und Kevlar gefertigt ist. Die innere Schicht beinhaltet ein tragender stabförmiger Kern, der aus in mehreren Lagen Kohlefaser eingewickelten Schaumstoff besteht.

Eine untere Hinterkante 112 eines hinteren Bereichs des Sattels 100 beinhaltet ebenfalls einen Kern aus Schaumstoff, der im dem Laminat aus Kohlefaser miteingebunden wird. Der Kern aus Schaumstoff ist so geformt, um an dem Verlauf des hinteren Bereiches und insbesondere der unteren Hinterkante 112 angepasst zu werden. Dies kann erreicht werden, indem der Schaumstoff in einer einfachen Weise verarbeitet und um Radien geformt werden kann. Die Sitzoberfläche150, die aus dem Laminat Kohlefaserkunststoff und Kevlar besteht kann so hergestellt werden, um flexibel entlang einer der Sitzoberfläche senkrechten Richtung zu sein. Die Sitzoberfläche 150 kann, insbesondere in dem hinteren Bereich des Sattels 100, Stöße abfangen und zu der unteren Hinterkante 112 weiterleiten. Dies erhört der Komfort des Sattels beim Radfahren, erfordert aber eine tragende Struktur die solche Stöße sicher absorbieren kann. Der in der unteren Hinterkante 112 eingebundene Schaumstoff verleiht diesem Bereich die nötige Steifigkeit und Flexibilität um Brüche zu vermeiden. In einer vorteilhaften Ausführungsform kann der Kern aus Schaumstoff und aus dem Kohlefaser Laminat in eine Kevlar Schicht miteingebunden werden. Die Kevlar Schicht verleiht dem hinteren Bereich des Sattels zusätzliche Steifigkeit und vermeidet somit unerwartete Brüche. Die Eigenschaften der Kevlar Schicht, sowie die Vorteile eine zusätzliche Kevlar Schicht zu benutzen, werden im Zusammenhang mit der Beschreibung des Klemmbereiches ausführlicher kommentiert.

Der hintere Bereich 112 kann kontinuierlich in den Klemmbereich 111 verbunden werden, um ein durchgehendes Gestell zu erzeugen. Durch diese Konstruktion wird eine zusätzliche Steifigkeit des Rahmens garantiert.

Ferner, weist die Sitzoberfläche 150 eine in die Längsrichtung des Sattels verlaufende Öffnung 140 auf. Die Öffnung 140 kann einen Schlitz sein, der sich im mittleren Bereich der Satteloberfläche befindet. Die Öffnung 140 könnte an der Höhe vom Schambereich ausgeschnitten werden um Druckstellen zu vermeiden. Somit kann der Komfort erhöht werden. Zusätzlich kann die Öffnung 140 zum Fixieren einer Sitzauflage verwendet werden. Obwohl der Sattel 100 eine Öffnung 140 auf der oberen Oberfläche der Sitzoberfläche 150 aufweist, ist eine solche Öffnung optional und der Sattel 100 kann erfindungsgemäß auch ohne die Öffnung 140 realisiert werden.

Außerdem weist der Sattel 100 seitliche Öffnungen 130 auf, die in die Längsrichtung des Sattels verlaufen. Die seitlichen Öffnungen 130 trennen den Klemmbereich 111 von der Sitzoberfläche 150 und erhöhen damit die Flexibilität und damit den Komfort der Sitzoberfläche. Durch die seitlichen Öffnungen 130 ist die Struktur des Sattels 100 flexibler und kann somit Stöße besser absorbieren. Demzufolge wird der Komfort durch die seitlichen Öffnungen 130 erhöht. Da die seitlichen Öffnungen 130 den Klemmbereich von der Sitzoberfläche trennen, können Bolzen für die Befestigung des Sattels 100 an einer Sattelstütze in einer einfachen Weise fixiert werden. Ein vorderer Teilbereich 131 der seitlichen Öffnung 130 ist verstärkt, indem mehrere zueinander gesperrte Lagen gelegt werden. Eine erste Gewebelage ist z.B. mit einer zweiten Gewebelage gesperrt, wenn die Richtung der Fasern der zweiten Gewebelage in einem Winkel mit Bezug auf die Richtung der Fasern der ersten Gewebelage liegt. Mit anderen Worten erfolgt der Lagenaufbau so, dass die einzelnen Gewebelagen in verschiedenen Winkeln zueinander liegen. Je mehr gesperrte Gewebelagen gelegt werden, desto steifer und stabiler ist die Oberfläche. Insbesondere genügen drei gesperrte Lagen um die nötige Stabilität und Steifigkeit zu erreichen. Durch diesen Lagenaufbau können Brüche im vorderen Bereich 131 vermieden werden. Die seitlichen Öffnungen 130 sind optional und der Sattel kann auch ohne diese realisiert werden.

Der vordere Teilbereich 131, der gegenüber der vorderen Kante der seitlichen Öffnungen 130 liegt, ist beim Radfahren besonders stark beansprucht. Dieser Teilbereich 131 kann mit einem bestimmten Lagenaufbau geformt werden um die Stabilität zu erreichen, die stressbedingte Brüche vermeiden kann. Vorteilhaft wird der Teilbereich 131 aus drei miteinander gesperrten Gewebelagen geformt wird; andere Konfigurationen können aber auch erfindungsgemäß benutzt werden.

Die oben beschriebenen Materialien, aus denen der Sattel 100 gefertigt ist, stellen lediglich ein Beispiel dar. Es muss aber Klar sein, dass andere Materialien bzw. Kombinationen von Materialien benutzt werden können. Der Sattel könnte zum Beispiel aus Kunststofffasergewebe, wie Karbonfasergewebe, gefertigt sein.

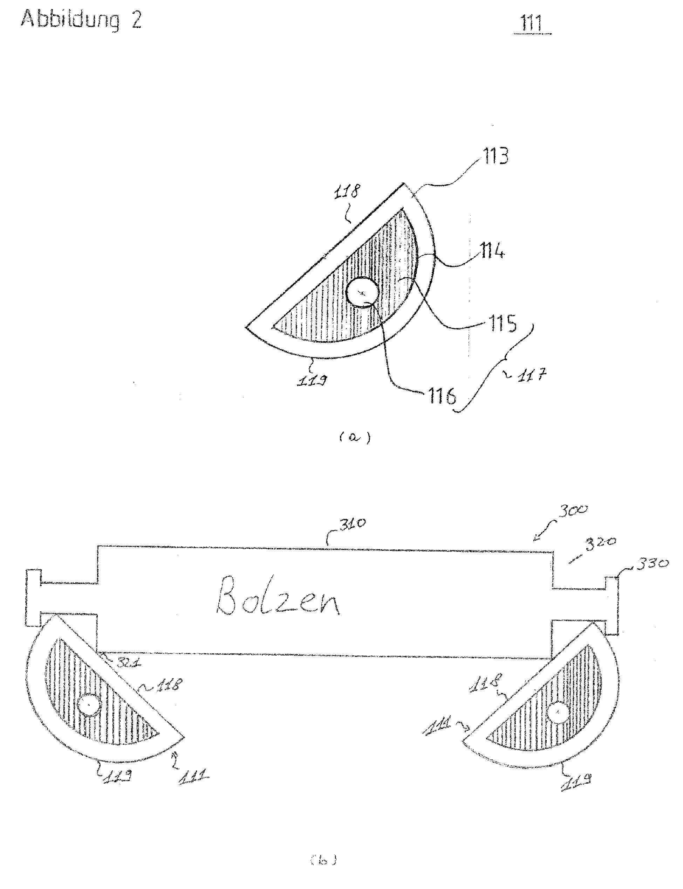

Abbildung 2 zeigt einen Querschnitt des an einen Bolzen Aufgelegten Klemmbereiches 111 gemäß einer Ausführungsform der vorliegenden Erfindung und eine Vergrößerung des Querschnitts des Klemmbereiches 111. Der Klemmbereich 111 umfasst eine äußere Lage aus Kohlefaser 113, eine optionale innere Kevlar Schicht 114 und einen Kern 117, der aus Kohlefaser 115 und Schaumstoff 116 besteht. Insbesondere wird zunächst der Schaumstoff auf dem Kohlefasergewebe gelegt und danach wird das Kohlefasergewebe um den Schaumstoff ein- oder mehrfach gewickelt um den Kern 117 zu formen. Der so errichtete Kern 117 umfasst aus eine oder mehrere Lagen Kohlefaser 115 und eine darin eingewickelte Schaumstoff Einlage. Die Anzahl der Lagen Kohlefaser 115 kann variieren um eine gewünschte Steifigkeit zu erreichen.

Der aus der Lage Kohlefaser 115 und dem Schaumstoff 116 bestehende Kern 117 kann optional in mindestens einer Kevlar Schicht 114 eingewickelt werden. Durch die Kevlar Schicht 114 wird der Kern 117, der das Gestell und somit den Sattel tragen soll, flexibler und kann somit Stöße besser absorbieren. Die Kevlar Schicht 114 gewährleistet genügend Festigkeit und Härte, um den für den Klemmbereich des Sattels entwickelten Kern 117 zu bewahren. Mithin kann die Kevlar Schicht 114 den Kern 117 von äußeren Einflüssen, wie z.B. ein zu festes Anziehen von Befestigungsbolzen im Klemmbereich des Sattels, schützen.

Außerdem, sollte der Kern 117 zu Bruch gehen, würde die Kevlar Schicht 114 vermeiden, dass ein Versagen der tragenden Struktur des Sattels 100 sich nicht explosionsartig verbreitet, sondern dass es allmählich passiert. Ein allmähliches Versagen des Sattelgestells 110 hat als Folge, dass dem Radfahrer noch Zeit bleibt zu reagieren, um einen Unfall mit gesundheitsgefährlichen Folgen zu vermeiden. Die Benutzung der Kevlar Schicht 114 hat daher den zusätzlichen Vorteil, die Sicherheit des Sattels 100 zu erhöhen.

Die Kevlar Schicht 114 ist des Weiteren wärme- und kältebeständig und vermeidet somit, dass der Klemmbereich durch Temperaturschwankungen geschwächt wird. Schließlich ist Kevlar dehnbeständig und auch resistent gegenüber Chemikalien und UV Strahlen. Die Kevlar Schicht 114 trägt dazu bei, den tragenden Kern 117 zusätzlich gegenüber den Belastungen zu verstärken, denen ein Sattel normalerweise ausgesetzt ist.

Der Klemmbereich kann zwei in die Längsrichtung des Sattels verlaufende Klemmelemente 111 umfassen. Die Klemmelemente können Schläuche mit beliebigem Querschnitt sein. Beim fixieren des Sattels 100 an einer Sattelstütze (nicht gezeigt) kann der Klemmbereich 111 an einem Fixierbolzen 300 befestigt werden. Zwei gegenüberstehende seitliche Bereiche des Fixierbolzens 300 weisen jeweils eine Vertiefung 320 auf. Die Vertiefung 320 definiert somit einen im Wesentlichen zylindrischen Hauptteil 310 und zwei gegenüberstehende Endteilen 330 des Fixierbolzens. Jedes Klemmelement kann in der jeweiligen Vertiefung 320 aufgelegt und zwischen dem Fixierbolzen 300 und der Sattelstütze geklemmt werden.

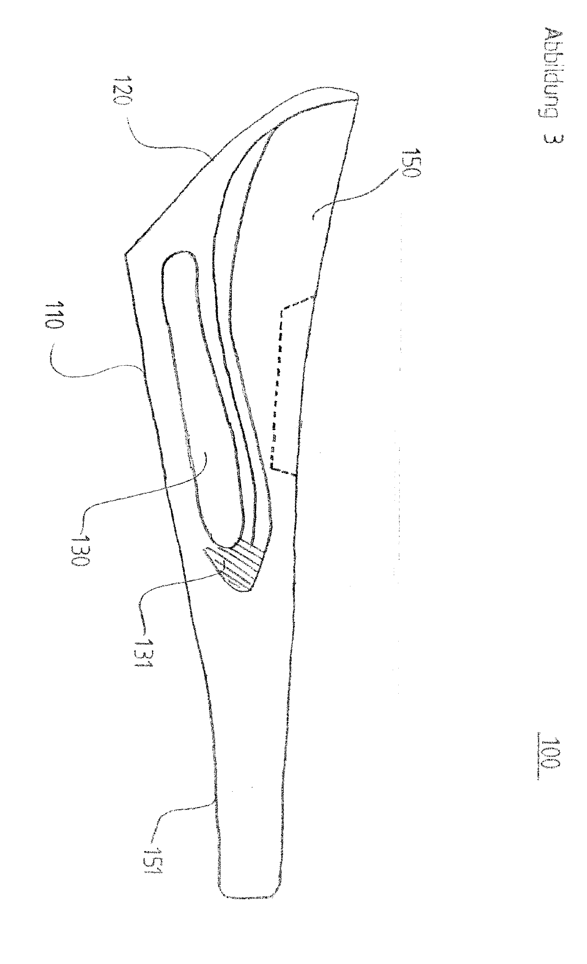

Gemäß einer vorteilhaften Ausführungsform der Erfindung, kann der Querschnitt jedes Klemmelementes ein Kreissegment und insbesondere ein Halbkreis sein. Beim Fixieren des Sattels stützt eine Kreissehne 118 des Klemmelementes 111 an einer von der Vertiefung 320 definierten Kante 321 des Hauptteils 310. Ein Kreisbogen 119 des Klemmelementes 111 stützt in gleicher Weise auf einer Fläche des Endteils 330, welche dem Hauptteil 310 gegenüberliegt. Schließlich kann sich eine aus der Kreissehne 118 und aus dem Kreisbogen 118 gebildete kannte an dem Boden der Vertiefung 320 anlehnen. Klemmelemente mit diesem Querschnitt gewähren den Fixierbolzen 300 zumindest drei Auflagepunkte. Abbildung 3 zeigt eine schematische Skizze einer Seitenansicht des Sattels 100 gemäß einer Ausführungsform der vorliegenden Erfindung. Der Sattel 100 ist im vorderen Bereich 151 mit Kohlefaser und Aramidfaser (Kevlar) gefertigt. Je nach Anspruch kann der vordere Bereich 151 so verstärkt werden, indem man die Anzahl der Lagen von Kohlefaser und Aramidfaser (CFK/Kevlar) erhöht. Außerdem sind die seitlichen Flanken im vorderen Bereich 151 nach innen abgerundet, damit ein Scheuern der Fahrradhose vermieden werden kann.

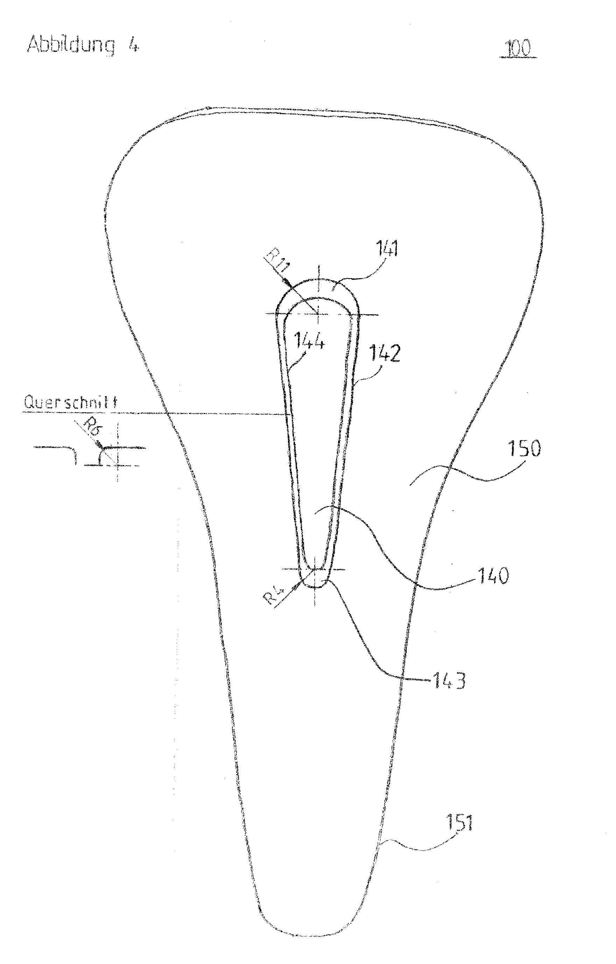

Abbildung 4 zeigt eine schematische Skizze einer Draufsicht des Sattels 100 gemäß einer Ausführungsform der vorliegenden Erfindung. Der Sattel 100 ist mit einer Öffnung 140 ausgestattet. Die Öffnung 140 ist abgerundet indem eine Kante 144 der Öffnung 140 nach innen in die entgegengesetzte Richtung der Sitzoberfläche gebogen ist. In einer vorteilhaften Ausführungsform der vorliegenden Erfindung ist die Kante 144 an einem hinteren Öffnungsende 141 der Öffnung 140, welches in dem hinteren Bereich des Sattels liegt, mit einem Radius von 11 mm geformt. Ein vorderes Öffnungsende 143 der Öffnung 140, welches in dem vorderen Bereich 151 liegt, ist mit einem Radius von 4mm geformt. Schließlich ist eine seitliche Kante 142 der Öffnung 140 mit einem Krümmungsradius von 6mm nach innen gebogen. Durch diese Radien in der Öffnung 140 kann ebenfalls ein Scheuern der Fahrradhose ausgeschlossen werden.

Die oben genannten Radien sowie die Geometrie der Öffnung sind nur eine mögliche Wahl und es muss klar sein, dass auch Öffnungen mit einer anderen Geometrie erfindungsgemäß vorgesehen werden können. In ähnlicher Weise kann die Kante 144 mit einem anderen Krümmungsradius gebogen werden, als der oben definierte Krümmungsradius.

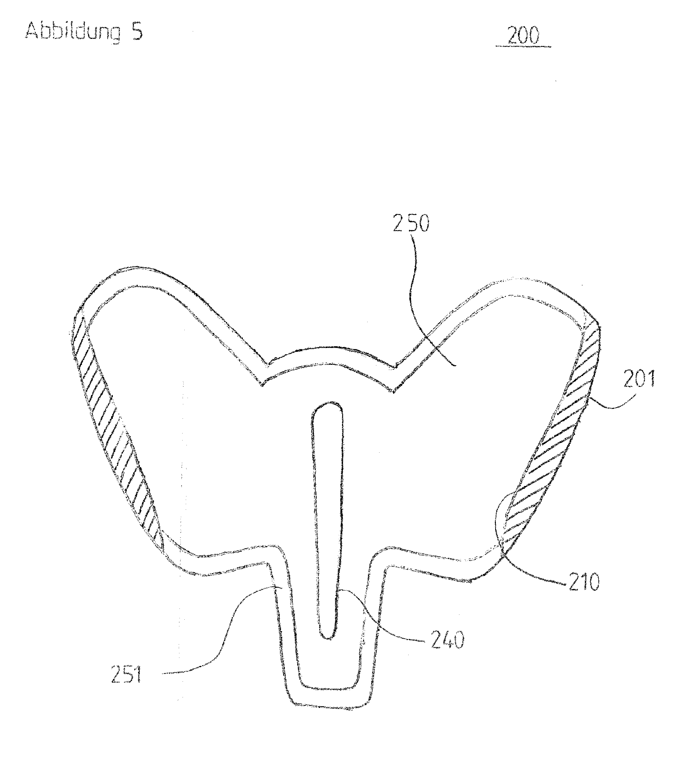

Abbildung 5 zeigt eine schematische Skizze einer Untersicht der Sitzauflage 200 gemäß einer Ausführungsform der vorliegenden Erfindung. Die Sitzauflage 200 umfasst ein Polster 201, ein Gestell 250 und einen in die Längsrichtung der Sitzauflage verlaufenden Vorsprung 240. Das Gestell 250 kann vorteilhaft aus Kohlefaser gefertigt werden um das gesamte Gewicht der Sitzauflage zu reduzieren und ihre Flexibilität zu erhöhen. Obwohl die Sitzauflage 200 ein Polster umfasst, kann diese erfindungsgemäß auch ungepolstert sein.

Die Sitzauflage 200 ist so flexibel geformt, dass sie passgenau auf der Sitzoberfläche eines Sattels, wie z.B. der Sitzoberfläche 150 des Sattels 100, platziert und an dem Sattel verankert werden kann. Die seitlichen Kanten 210 des Gestells 250 sind gebogen und so geformt, dass sie über die seitliche Flanke eines Sattels positioniert und befestigt werden können. Die seitlichen Kanten 210 dienen als Verankerungselemente und verhindern jede seitliche Bewegung der Sitzauflage in Bezug auf den Sattel 100. Beim Befestigen der Sitzauflage mittels der seitlichen Kanten 210 wird der Vorsprung 240 in die Öffnung 140 des Sattels 100 hineingeschoben. Dies verhindert das Ausrutschen der Sitzauflage 200 in Richtung des vorderen/hinteren Bereiches des Sattels 100. Der Vorsprung 240 dient zusätzlich als Hilfsmittel um die richtige Positionierung der Sitzauflage 200 auf dem Sattel 100 zu bestimmen: Der Vorsprung ist so positioniert, um in die Öffnung 140 hineingeschoben werden zu können. Ebenso sind die Verankerungselemente 210 korrekt positioniert, um an den seitlichen Flanken des Sattels 100 verankert zu werden.

In einer vorteilhaften Ausführungsform der vorliegenden Erfindung besteht der Vorsprung aus zwei dehnfähigen Finnen. Ferner weist ein überstehendes Ende jeder Finne ein Einrastelement auf, das geeignet ist an einer Unterseite der Sitzauflage des Sattels 100, wie z.B. an der gebogenen Kante 144, eingerastet zu werden. Somit kann die Sitzauflage 200 noch stabiler an dem Sattel 100 verankert werden. Die Sitzauflage kann ferner abgenommen werden, indem man die Finnen gegeneinander drückt und somit die Einrastelemente von der Unterseite des Sattels 100 löst.

Obwohl die oben beschriebene Sitzauflage einen Vorsprung 240 zur korrekten Positionierung und zur Befestigung umfasst, ist diese Ausführung nicht limitierend und die Sitzauflage kann gleichwohl anhand von anderen Befestigungsmitteln an dem Sattel 100 verankert werden.

In einer Ausführungsform der Erfindung weist die Sitzauflage eine hintere Kante auf, die gebogen und so geformt ist, um an der hinteren Flanke des Sattels lösbar verankert zu werden. Diese Konfiguration vermeidet, dass die Sitzauflage nach vorne rutscht. Zu diesem Zweck können die seitlichen Kanten und die hintere Kante der Sitzauflage 200 gebogen und so geformt werden, dass sie an den seitlichen und hinteren Flanken des Sattels 100 lösbar verankert werden können. Die seitlichen gebogenen Kanten dienen als seitliche Verankerungselemente und die hintere gebogene Kante dient als hinteres Verankerungselement. Gemäß dieser alternativen Ausführungsform vermeiden die seitlichen Verankerungselemente, wie bereits oben erwähnt, ein seitliches Ausrutschen der Sitzauflage. Das Ausrutschen der Sitzauflage nach vorn wird mittels der hinteren gebogenen Kante verhindert. Gemäß dieser Ausführungsform kann die Sitzauflage der vorliegenden Erfindung auch an einem Sattel sicher verankert werden, der keine Öffnung auf der Sitzoberfläche aufweist.

Die seitliche und das hintere Verankerungselement können als eine umlaufend konstruierte Kante 210 aufgebaut werden. Den Halt findet das Gestell 250 mit der umlaufend konstruierten Kante 210 die über die äußersten Flanken der Satteldecke 150 positioniert ist. Das Gestell 250 kann gemäß einer vorteilhaften Ausführungsform der vorliegenden Erfindung aus drei Lagen Kohlefaserkunststoff bestehen, die gesperrt zueinander liegen. Außerdem kann die Auflage in Autoklaven Technik gefertigt werden, was sich in der Steifigkeit, Festigkeit und Flexibilität widerspiegelt.

Die Sitzauflage hat keine tragende Funktion und muss keinen großen Beanspruchungen standhalten. Daher kann das Gestell aus verschiedenen Materialien, wie z.B. Kunststoff oder Glasfaser, hergestellt werden.

Die Sitzauflage 200 lässt sich nur mittels des Vorsprungs 240 und/oder der Verankerungselementen 210 ohne weitere Hilfsmittel wie z.B. Schrauben, Kleben, usw. mit der Satteldecke 150 befestigen, indem die Position der Sitzauflage durch den Vorsprung 240 und die Öffnung in der Satteldecke 140 oder durch die umlaufend konstruierte Kante 210 vorgegeben ist. Diese Bauweise ermöglicht Gewicht zu reduzieren, indem zusätzliche Verankerungselemente, wie z.B. Schrauben, nicht mehr erforderlich sind. Da die Sitzauflage gemäß der vorliegenden Erfindung nicht an dem Sattel geklebt werden muss, kann diese in einer flexiblen Weise montiert und abgenommen werden. Somit kann der Sattel nach dem Wunsch des Benutzers und nach der Eigenschaft der gefahrenen Strecke gestaltet werden.

Zusätzlich kann das Kohlefasergestell 250 mit einem Polster 201 vorgesehen werden. Das Polster 201 besteht aus einem Schaumstoff und einem Bezug z.B. aus Leder, Kunstleder, Stoff oder jedem Material, das als Bezug geeignet ist. Der Bezug könnte mit der Unterseite des Gestells 250 mittels Kleber, Klemmen oder ähnlichem befestigt werden. Damit die Dicke des Bezugs nicht aufträgt, ist an der Unterseite des Gestells 250 umlaufend eine Vertiefung 251 konstruiert, indem der Bezug seine Position findet.

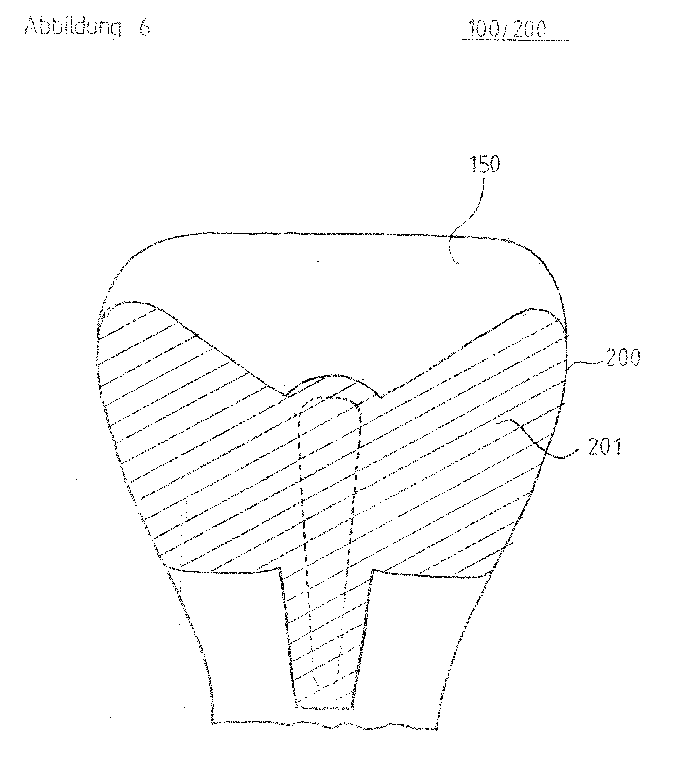

Abbildung 6 zeigt eine schematische Skizze einer Draufsicht des Sattels 100 an dem die Sitzauflage 200 montiert ist, gemäß einer Ausführungsform der vorliegenden Erfindung.

Das Polster 201 umfasst eine Polsterung, wie z.B. Moosgummi, und einen Bezug, wie z.B. Leder, Kunstleder oder Stoff, der in der Mitte des Polsters 201 abgenäht werden kann. Je nach Fahrerwunsch kann das Polster 201 verändert werden, indem eine dünnere oder dickere Polsterung unter dem Bezug eingebracht wird. Als Moosgummi wird ein elastischer Schaumstoff Chloren, Naturkautschuk oder synthetischer Kautschuk bezeichnet.

Aus der Abbildung 6 ist es möglich zu sehen wie der Vorsprung 240 in die Öffnung 140 des Sattels 100 platziert wird um die Sitzauflage stabil an dem Sattel 100 zu befestigen.

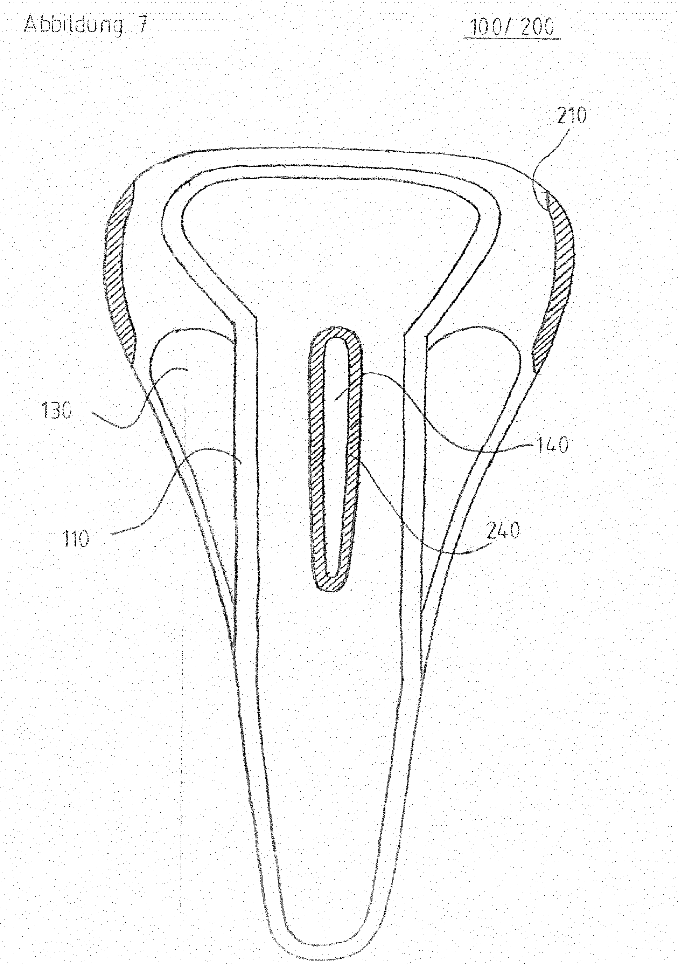

Abbildung 7 zeigt eine schematische Skizze einer Untersicht des Sattels 100 an dem die Sitzauflage 200 montiert ist gemäß einer Ausführungsform der vorliegenden Erfindung. Wenn die Sitzauflage 200 an dem Sattel 100 montiert ist, umwickeln zumindest teilweise die seitlichen Verankerungselemente 210 die korrespondierenden seitlichen Flanken des Sattels 100. Insbesondere rutscht die flexible Sitzauflage 200 über die äußersten seitlichen Flanken des Sattels bis die nach innen gebogenen seitlichen Kanten 210 der Sitzauflage an den äußersten seitlichen Flanken des Sattels 100 einrasten und somit die Sitzauflage 200 an dem Sattel 100 fixieren.

Die vorliegende Erfindung betrifft weiterhin ein Verfahren zur Erstellung eines Sattels für Fahrräder, der eine Sitzoberfläche und ein Sattelgestell aus Kunststofffasergewebe umfasst. Das Verfahren umfasst im 1. Schritt des Aufbauens, mindestens eine Lage aus Kunststofffasergewebe zur Fertigung einer Sitzoberfläche. Des Weiteren wird mindestens eine Lage aus Kunststofffasergewebe zur Fertigung des Sattelgestells aufgebaut. Der Lagenaufbau der Sitzoberfläche sowie der Lagenaufbau des Sattelgestells werden durch ein Verbindungselement zusammengesetzt und folglich durch Autoklaven Technik verbunden.

Der Sattel 100 wird mithilfe einer Form gefertigt die aus vier Formteilen besteht: eine Oberschale für die Sitzoberfläche 150 und eine Unterschale für das Sattelgestell 110, die sich aus drei Formteilen zusammensetzt. Die Sitzoberfläche 150 und das Sattelgestell 110 werden separat gefertigt, indem ein Laminat mit den nötigen Lagen aus Kohlefaser und eventuell Kevlar in der Oberschale bzw. der Unterschale aufgebaut wird. Nach dem Abschließen des Lagenaufbaus, werden die Ober- und Unterschale mit dem jeweiligen Laminat zusammengesetzt und durch Befestigungsmittel, wie z.B. Schrauben, in Position gebracht. Anschließend werden der Lagenaufbau der Sitzoberfläche und der des Sattelgestells mit einem Verbindungselement aus Kohlefaser und optional einem Verbindungselement aus Kevlar verbunden. In einer vorteilhaften Ausführungsform kann der Streifen aus Kohlefaser, sowie der Streifen aus Kevlar ca. 2 cm oder 2,5 cm breit sein. Die oben angegebenen Maße sowie die Geometrie der Verbindungselemente sind offensichtlich nicht limitierend und es muss klar sein, dass der Lagenaufbau der Sitzoberfläche und der des Sattelgestells mittels anderen Verbindungselementen verbunden werden können. Durch eine Autoklaven Technik werden die Gewebelagen so miteinander verbunden, dass sich ein Lösen des Sattelgestells 110 zur Sitzoberfläche 150 ausgeschlossen werden kann. Der Sattelgestell 110 ist somit mit der Sitzoberfläche 150 integral geformt.

## Patentansprüche

1. Sattel (100) für Fahrräder umfassend eine Sitzoberfläche (150) und ein Sattelgestell (110), die aus Kunststofffasergewebe gefertigt sind,
wobei das Sattelgestell (110) integral mit der Sitzoberfläche (150) geformt ist und unterhalb der Sitzoberfläche (150) einen Klemmbereich (111) aufweist; und
wobei in dem Klemmbereich (111) ein Schaumstoff in dem Kunststofffasergewebe eingebunden ist.

2. Der Sattel (100) nach Anspruch 1, wobei ein hinterer Bereich der Sitzoberfläche (150) einen Schaumstoff aufweist, der in Kunststofffasergewebe eingebunden ist.

3. Sattel (100) nach Anspruch 1 oder 2, wobei in dem Klemmbereich (111) der Schaumstoff in mindestens einer Lage aus Kunststofffasergewebe (115) eingewickelt ist.

4. Der Sattel (100) nach einem der Ansprüche 1 bis 3, wobei der Klemmbereich des Sattelgestells (110) zwei in die Längsrichtung des Sattels (100) verlaufende Klemmelemente (111) umfasst.

5. Der Sattel (100) nach Anspruch 4, wobei die Klemmelemente (111) Schläuche sind und der Querschnitt der Schläuche im Wesentlichen ein Kreissegment ist.

6. Der Sattel (100) nach einem der Ansprüche 1 bis 5, wobei der Schaumstoff in einer unteren Kante (112) des hinteren Bereichs eingebunden ist und von der unteren Kante (112) in den Klemmbereich kontinuierlich verläuft.

7. Der Sattel (100) nach einem der Ansprüche 1 bis 6, wobei die Sitzoberfläche (150) einen Schlitz (140) aufweist, der in die Längsrichtung des Sattels (100) verläuft.

8. Eine Sitzauflage (200) für einen Sattel, die ein Gestell (250) umfasst, wobei das Gestell (250) geeignet ist auf dem hinteren Bereich des Sattels positioniert zu werden und wobei mindestens eine Kante des Gestells (250) ein Verankerungselement (210) aufweist, das geeignet ist an einer Flanke des hinteren Bereiches des Sattels lösbar verankert zu werden.

9. Die Sitzauflage nach Anspruch 8, wobei das Verankerungselement eine gebogene Kante (210) des Gestells (250) ist.

10. Die Sitzauflage (200) nach Anspruch 8 oder 9, wobei eine untere Oberfläche der Sitzauflage (200) einen Vorsprung (240) aufweist, der geeignet ist in einen Schlitz des Sattels hineingeschoben zu werden.

11. Die Sitzauflage (200) nach Anspruch 10, wobei der Vorsprung (240) aus zwei dehnfähigen Finnen besteht und ein überstehendes Ende jeder Finne ein Einrastelement aufweist, das geeignet ist an einer Unterseite eines Sattels eingerastet zu werden.

12. Der Sattel (100) nach einem der Ansprüche 1 bis 7, der weiterhin eine Sitzauflage (200) nach einer der Ansprüche 8 bis 11 umfasst, wobei die Sitzauflage (200) an dem Sattel (100) lösbar montierbar ist.
